# EUROPEAN PATENT APPLICATION

(11) **EP 1 072 617 A1**
(43) Date of publication of application: **31.01.2001**
(21) Application number: 99202523.9
(22) Date of filing: 30.07.1999
(51) Int. Cl.: C08F 8/12, C08F 220/54, C08F 220/28

(54) **Temperature sensitive polymers**

(71) Applicant: Universiteit van Utrecht, 3584 CS Utrecht (NL); STICHTING VOOR DE TECHNISCHE WETENSCHAPPEN, 3527 JP Utrecht (NL)
(72) Inventor: Hennink, Wilhelmus Everhardus, 2743 CZ Waddinxveen (NL); Hinrichs, Wouter Leonardus Joseph, 9718 EG Groningen (NL); Mulders-Neradovic, Dragana, 5231 AC 's-Hertogenbosch (NL)
(74) Representative: Ottevangers, Sietse Ulbe

(57) **Abstract**

The present invention relates to compositions comprising polymers whose solubility characteristics can be changed by incubation. Another aspect of this invention is the application of such temperature sensitive polymers as release systems of biologically active compounds. The polymers of the present invention, comprise monomers which have modifiable functionality. The functionality of the monomers can for example be modified by the presence of hydrolysable groups. The modification is effected by the incubation, leading to a change of the water solubility characteristics of the polymer. The polymers used in the present invention contain hydrolysable chemical groups. As a result the polymer's solution characteristics, specifically its lower critical solution temperature (LCST), change upon incubation.

## Description

The present invention relates to compositions comprising polymers whose solubility characteristics can be changed by incubation. Another aspect of this invention is the application of such temperature sensitive polymers as release systems of biologically active compounds.

The fast developments in the field of molecular biology and biotechnology have made it possible to produce a large number of pharmaceutically interesting products in large quantities. For instance, pharmaceutically active peptides and proteins can suitably be used as drugs in the treatment of life-threatening diseases, *e.g.* cancer, and of several types of viral, bacterial and parasital diseases; in the treatment of *e.g.* diabetes; in vaccines, *e.g.* for prophylactic aims; and for anti-conception purposes. Especially the specialized biological activities of these types of drugs provide tremendous advantages over other types of pharmaceutics. Also low molecular weight pharmaceuticals, such as cytostatics, antibiotics, etc. can be produced in large amounts.

To illustrate the fast developments, it has been reported (see e.g. Soeterboek and Verheggen, Pharm. Weekblad 130 (1995) 670-675) that in the United States of America, about 275 biotechnological products are in phase IV studies, while more than 500 products are under investigation.

Examples of (recombinant) proteins, which are considered very interesting from a pharmacological point of view, are cytokines, such as interleukines, interferons, tumor necrosis factor (TNF), insulin, proteins for use in vaccines, and growth hormones.

Due to their nature, proteins and proteinaceous products, including peptides, which group of products will be referred to as protein drugs herein-below, cannot be administered orally. These products tend to degrade rapidly in the gastro-intestinal tract, in particular because of the acidic environment and the presence of proteolytic enzymes therein.

Moreover, to a high extent protein drugs are not able to pass endothelial and epithelial barriers, due to their size and, generally, polar character.

For these reasons, protein drugs have to be brought in the system parenterally, *i.e.* by injection, however, the pharmacokinetical profile of these products is such that injection of the product *per se* requires a frequent administration. For, it is a known fact that proteinaceous material is eliminated from the blood circulation within minutes.

In other words, since protein drugs are chemically and/or physically unstable and generally have a short half-life in the human or animal body, multiple daily injections or continuous infusions are required for the protein drug to have a desired therapeutic effect. It will be evident that this is inconvenient for patients requiring these protein drugs. Furthermore, this type of application often requires hospitabilization and has logistic drawbacks.

In addition, it appears that at least for certain classes of pharmaceutical proteins, such as cytokines which are presently used in *e.g.* cancer treatments, the therapeutic efficacy is strongly dependent on effective delivery, *e.g.* intra- or peritumoral. In such cases, the protein drugs should be directed to the sites where their activity is needed during a prolonged period of time.

Hence, there is a need for delivery systems which have the capacity for controlled release. In the art, delivery systems comprising soluble polymers have been proposed. Such delivery systems can be obtained by using such soluble polymers for example in the form of microparticles in which the protein drug is encapsulated. The polymer can be present throughout each microparticle, with the protein drug captured within the different polymer molecules.
Alternatively, the polymer forms the outer membrane of the microparticle which contains the protein drug. However, *in vitro* or *in vivo* application of such systems have some inherent drawbacks. First, organic solvents have to be used to encapsulate proteins in the microparticles. Second, acidic products are frequently formed during degradation, which might result in a lowering of the pH. Both a low pH and organic solvents can affect protein stability. Furthermore, it appears to be difficult to control the protein release from these systems, which can lead to a burst release.

The present inventors have now found that the use of temperature sensitive polymers, and especially those with a lower critical solution temperature, have a number of advantages.

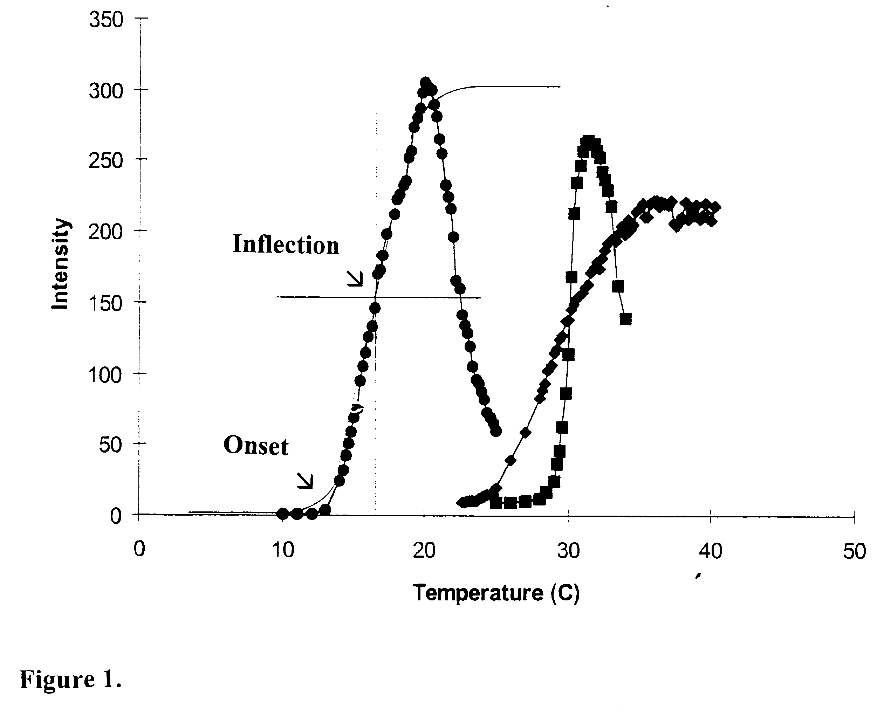

Temperature sensitive polymers with a lower critical solution temperature (LCST) are remarkable materials, in that below this temperature such polymers are soluble, and above it they precipitate. The lower critical solution temperature can be defined as the temperature at the point of inflection in a graph representing the amount of solids in the sample (for example as measured using light scattering techniques) vs. temperature. Alternatively, the LCST can be defined as the lowest temperature where precipitated polymer particles are detected (the 'onset' temperature). An example of a light scattering curve is shown in Figure 1. Both the temperature at the point of inflection and the onset temperature are marked.

LCST-polymers can be used advantageously as drug release systems, because their preparation can be carried out at a temperature which is lower than the temperature at which the release is to be effected, for example the body temperature. Since the temperature can be kept low, there is little risk of denaturation or degradation of the (protein) drug to be released. Another important advantage of the use of LCST-polymers in drug release systems is that the loading of the drug delivery system can be accomplished in an aqueous system, avoiding the use of toxic organic solvents. In addition, the LCST-polymers can be chosen such that they are degradable and/or can easily be excreted by the kidneys, once in soluble form.

The LCST-polymer systems can also be used for drugs-targeting by incorporation into the matrix of compounds which make the system suitable for physico-chemical or physical homing strategies. Such strategies employ a homing device, which is a characteristic protrusion on a particle, capable of recognizing the target cell or tissue. Examples of such homing devices are monoclonal antibodies or fragments thereof, growth factor, insuline, sugar moieties, transferin, etc. In the physico-chemical strategy, homing devices are designed such that they only recognise and interact with specific structures on the surface of target cells or tissues. In the physical strategy, homing devices are designed to accumulate at target sites by physical means, such as a local magnetic field or heat. See for example D.J.A. Crommelin *et al.*, Adv. Drug. Deliv. Rev. 17 (1995) pp. 49-60.

The protein drug delivery systems based on LCST-polymers can be prepared conveniently by introduction of the protein drug into the polymer matrix. This is obtained by mixing the protein drug with the polymer, which is in dissolved state, for example because it is below its LCST. Subsequently, the mixture is brought in a state in which the polymer precipitates, for example by bringing it above its LCST, by which process the protein drug is captured within the precipitating polymer matrix, thus yielding a drug delivery system.

For the use in protein drug delivery systems, it is essential that the LCST-polymer to be applied is not below or above its critical solubility temperature. Effective application as controlled release system can only be obtained when the *in vivo* temperature is just below the critical solution temperature. Although it is known in the art that the LCST-polymers can be modified by changing their composition, it will be clear that a choice with respect to the LCST has to be made prior to the administration. Once a certain polymer is chosen, its LCST is fixed. Variations of the application temperatures, as can occur easily for example as a result of differences or variations in body temperature, can lead consequently to different and non-gradual release profiles.

The present invention provides a polymer that is suitable for use in a controlled release system.
Consequently, this polymer can be applied as a controlled release system having all the aforementioned advantages.

The present inventors have found that when certain water soluble polymers are chemically modified, their critical solution temperature will vary *in situ, viz.* upon *in vivo* or *in vitro* application in an aqueous environment. These changes are time dependent. In this description and the appending claims, application in an aqueous environment, under conditions enabling the reactions that result in the change of critical temperature, for example as a result of hydrolysis, is referred to as incubation. It is also possible that the incubation is effected by enzymes present in the aqueous environment.

The polymer of the present invention comprises monomers which have modifiable functionality. The functionality of the monomers can for example be modified by the presence of hydrolysable groups. The modification is effected by the incubation, leading to a change of the water solubility characteristics of the polymer.

When reference is made to a polymer in this description, also copolymers, terpolymers and other polymers are to be understood. In fact, copolymers and terpolymers have the additional advantage that they provide an extra parameter affecting the final result, since different monomers, having different solubility characteristics, can be incorporated in one polymer, as to adjust the solubility characteristics (such as the solubility itself or the temperature dependency of the solubility) of the resulting copolymer. Copolymers and terpolymers thus form a preferred embodiment of the present invention.

The polymer according to the present invention is obtained by choosing the properties of the monomers such that upon incubation the functionality of the monomers changes and as a result the solubility and/or the temperature dependency of the solubility of the entire polymer, changes.

In a particular embodiment, the monomers are chosen so that their hydrophilicity changes upon incubation. As a result, the hydrophilicity of the entire polymer will change upon incubation. This will lead to a polymer with a different solubility and/or temperature dependency of the solubility.

More specifically, a temperature sensitive polymer can be obtained according to the present invention by choosing the monomers from the group comprising ethylene glycol, lactic acid, acrylamide, methacrylamide, acrylic acid, and derivates and substituted species thereof to form homopolymers of one of these monomers or copolymers, terpolymers or other polymers of two or more monomers selected from this group. Preferred monomers are *N*-isopropyl acrylamide (NIPAM), 2-hydroxyethyl methacrylate (HEMA), 2-hydroxyethyl acrylate (HEA), acrylamide (AAm), glyceryl methacrylate or glycidyl methacrylate (GMA), glyceryl acrylate or glycidyl acrylate (GA), hydroxypropyl methacrylamide (HPMAM), dimethyl-aminoethyl methacrylate (DMAEMA) and dimethylaminoethyl acrylate (DMAEA).

In a preferred embodiment of the present invention, the change of solubility characteristics is effected by hydrolysis of a group present on at least one of the monomers that form the polymer. Such a group is preferably chosen from ester, amide, carbonate, carbamate, and anhydride groups. Even more preferably such a group comprises a lactate unit, such as a monolactate, a dilactate or an oligolactate group. In case of *in vivo* application such a group can advantageously be a enzymatically or chemically hydrolizable group. The ester groups are introduced in the polymer by choosing suitable monomers as a starting material, such as 2-hydroxyethyl methacrylate-monolactate. The monomers can be provided with ester groups by techniques known to the person skilled in the art.

The polymer can be synthesized by starting from a mixture of the monomers and carrying out the polymerization reaction. It is also possible to first produce the polymer and subsequently functionalize it by adding suitable groups. Compositions according to the present invention comprise block copolymers or terpolymers, random copolymers or terpolymers, random copolymers and polymeric networks, all of which polymers can be grafted, and mixtures thereof.

The solubility characteristics of the compositions according to the present invention will change upon incubation, for example when contacted with aqueous media, such as will be the case in *in vivo* application. When the polymers used are of the type that displays a lower critical solution temperature, this critical temperature is preferably between 0 to 100°C before incubation to form a polymer having a critical solution temperature that is within the same range.

For application in mammals, the polymers according to the present invention have a critical temperature for both the composition as synthesized and the composition after incubation which is around body temperature, viz. between about 20 to 45°C, preferably between 30 and 42°C, and most preferably between 36 and 38°C. However, more preferably the value of LCST crosses the normal human body temperature (which is typically 37°C) upon incubation so that the LCST before incubation is below 37°C, preferably below 35°C, and LCST after incubation is above 37°C, preferably above 38°C.

A preferred embodiment of the present invention is the use of the polymer in or as a controlled release system. For example for the controlled administration of drugs, such as protein drugs.

The controlled release system of the present invention can be used for the release of biologically active compounds, such as pharmaceutic compounds, e.g. pharmaceutically active peptides and proteins, genetic material e.g. nucleotides, plasmid DNA, anti-sense oligonucleotides, nutrients, etc.

When the system is used for the delivery of genetic material, e.g. the delivery of plasmid DNA or anti-sense oligonucleotides, the LCST polymer preferably comprises a cationic group, such as DMAEMA.

It is also possible to make the controlled release systems which can be obtained by the present invention in the form of polymeric micelles. Polymeric micelles can be formed by the synthesis of amphiphilic blockcopolymers, *e.g.* AB block copolymers of PEG and poly(β-benzyl-L-aspartic acid) (G.S. Kwon, M. Naito, M. Yokoyama, T. Okana, Y. Sakurai and K. Kataoka, Pharm. Res. 12 (1995) pp. 192-195). In aqueous solutions, these polymers form micelles with a size of around 20 nm (G.S. Kwon, M. Naito, M. Yokoyama, T. Okana, Y. Sakurai and K. Kataoka, Langmuir, 9 (1993) pp. 945-949). The hydrophobic core of these micelles can be loaded with drugs, *e.g.* the anti-cancer agent adriamycin. After *in vivo* administration of the these systems the adriamycin loaded micelles selectively accumulate in certain tumors simultaneously releasing the drug, which results in killing of tumor cells (M. Yokoyama, S. Fukushima, R. Uehara, K. Okamoto, K. Kataoka, Y. Sakurai and T. Okano, Journal of Controlled Release, 50 (1998) pp. 79-92). Polymers with an LCST have also been applied to design polymeric micelles. Below the LCST, the thermosensitive polymer acts as hydrophilic part of the system (*e.g.* in AB blockcopolymers of N-isopropyl acrylamide and styrene; S. Cammas, K. Suzuki, C. Sone, Y. Sakurai, K. Kataoka, and T. Okano, Journal of Controlled Release, 48 (1997) pp. 157-164). Also, systems have been described in which PNIPAAm forms the hydrophobic part of the polymeric micelle (in block copolymers of poly(ethylene glycol)) and poly(N-isopropylacrylamide; M.D.C. Topp, P.J. Dijkstra, H. Talsma and J. Feijen, Macromolecules, 30 (1997) pp. 8518-8520). After administration of the drug loaded PNIPAAm systems and arrival at the target site, drug release can then be triggered by local hypothermia. Hypothermia is, however, not easily done or technically feasible for all tissues and organs, which limits the applicability of these systems. These disadvantages can be overcome by using polymers composed of a hydrophilic block covalently linked to a block composed of thermosensitive polymer with hydrolyzable side groups. Such a hydrophilic block preferably comprises poly(ethyleneglycol). When the LCST of the thermosenstitive block is initially below body temperature, polymeric micelles are formed at 37°C. Due to hydrolysis of the side groups present in the thermosensitive block of the system, the LCST will increase, resulting in destabilization of the micelle when the LCST passes 37°C. When a drug is incorporated in the hydrophobic core, its release will be affected by this process. These systems can be favorably applied in *e.g.* cancer treatment, treatment of rheumatism, arthritis, infections and/or inflammations.

When the polymers of the present invention are used for targeting drug purposes, the release system is made of particles which particles have an average diameter of less than 1 µm, preferably less than 100 nm. To be of practical value, these particles will usually have to be larger than several nm, e.g. greater than 10 nm.

The polymer used in the present invention is for example a terpolymer of N-isopropylacrylamide (NIPAAm), HEMA-monolactate and acrylamide (Aam) in which the respective NIPAAm/HEMA-monolacatate and Aam monomer ratios are chosen to be for example 50/20/30. It will be understood that the ratio of different monomers which constitute the copolymer or terpolymer, will influence the LCST and its development upon incubation. Generally for practical application, *e.g.* application in mammals, it is desirable to choose the ratios such that the LCST before incubation is below body temperature and after incubation above body temperature. The optimal ratio of each of the monomers will consequently depend strongly on the materials used and the envisaged application. The optimal values can be determined experimentally, as will be illustrated in the Examples hereinafter.

An important aspect of the present invention is the use of hydrolysable chemical groups in a temperature sensitive polymer in order to change said polymer's solution characteristics, specifically its critical solution temperature, more specifically its lower critical solution temperature (LCST).

It will be understood that apart from changing the solubility of polymers having a lower critical solution temperature, this can also be applied to polymers having a higher critical solution temperature, *viz.* polymers which dissolve at temperatures higher than their critical temperature, and precipitate at temperatures lower than this critical temperature.

The effect of the incubation can be an increase as well as a decrease of the critical temperature upon incubation.

The controlled release systems of the present invention can be prepared by the synthesis of a water soluble polymer. This is done by a) functionalizing a monomer with hydrolysable groups, b) mixing of said monomer with at least one monomer of a different type in a suitable ratio using a suitable solvent in the presence of an initiator and/or a catalyst to form said polymer c) removing said solvent and dissolving the polymer, and d) precipitating said polymer; in which process the functionalizing of the monomers of step a) is optionally carried out after step b) on the monomers as they are present in the polymer; and subsequently mixing said water soluble polymer with a releasable compound.

Suitable initiators and catalysts for step b) are known in the art. An example of a suitable initiator is α,α'-azoisobutyronitrile (AIBN). An example of a suitable catalyst is stannous octoate (SnOct₂).

Apart from application as a controlled release agent, the polymers of the present invention can be applied as release systems for a variety of compounds in different applications, such as enzymes, colorants or other additives in laundry applications, adhesives in glues, insecticides or nutrients in agricultural applications, etc.

The present invention will now be illustrated in the following Examples.

### EXAMPLE 1

### Synthesis of poly(N-isopropylacrylamide-co-2-hydroxyethyl methacrylate-monolactate)

2-(Methacryloyloxy)ethyl-mono- or -oligolactate, which is HEMA esterified with one or more lactic acid groups, was synthesized using HEMA and L-lactide at a molar ratio of 2 to 1, essentially as described in Van Dijk-Wolthuis, W.N.E., Tsang, S.K.Y., Kettenes-van den Bosch, J.J. and Hennink W.E., 'A New Class of Polymerizable Dextrans with Hydrolyzable Groups: Hydroxyethyl Methacrylated Dextran With and Without Oligolactate Spacer', Polymer, 38, 6235-6242, (1997).

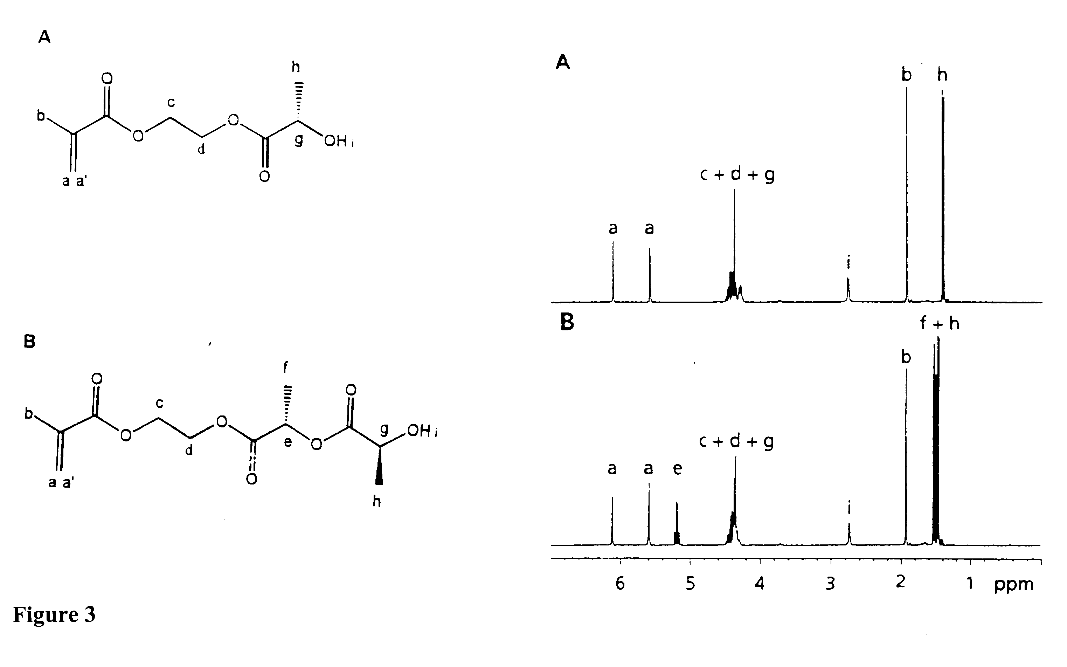

A mixture of HEMA (13.02 gram; 100 mmol) and L-lactide (7.2 gram, 50 mmol) was stirred at 110°C in a nitrogen atmosphere until the lactide was molten. Next, a catalytic amount of SnOct₂ (0.4 g, 1 mol-% with respect to HEMA; diluted 1:1 with toluene) was added and the reaction mixture was stirred for 1 hour. After one hour, the reaction mixture was allowed to cool to room temperature and insoluble products, probably consisting of SnOct₂ complexes, were removed by centrifugation (16000 G; 5 minutes). Next, 1 g of the clear, viscous mixture was dissolved in 1 cm³ acetonitrile and 500 µl of this solution was injected onto a preparative HPLC column (Econospher C8, 10 µm, 250x22 mm; Alltech, IL). An Äcta™ Purifier system (10XT, Pharmacia Biotech, Sweden) was used. Elution was done using a mobile phase consisting of 59% (w/w) water and 41 % (w/w) acetonitrile with flow rate of 5 cm³/min (UV detection λ=254 nm). The chromatograms were analyzed with Unicorn 2.30 software (Pharmacia Biotech, Sweden). Under these conditions HEMA, 2-(methacryloyloxy)ethyl-lactate and 2-(methacryloyloxy)ethyl-di-lactate had a retention time of approximately 16, 19 and 24 minutes, respectively. Corresponding fractions of different runs were collected, pooled and freeze dried. The obtained products were characterized by ¹H-NMR (see Figure 3).

^{**1**}**H-NMR 2-(Methacryloyloxy)ethyl-lactate (Figure 3A; CDCl**_{**3**}**) :** δ 6.11 (s, 1H, Hₐ), 5.59 (s, 1H, H_{a'}), 4.50-4.26 (m, 4H, H_{c}, H_{d}), 4.42 (q, J_{gh} = 6.9 Hz, 1H, H_{g}), 2.80 (bs, OHᵢ), 1.94 (s, 3H, H_{b}), 1.40 (d, J_{gh} = 6.9 Hz, 3H, Hₕ).

^{**1**}**H-NMR 2-(Methacryloyloxy)ethyl-di-lactate (Figure 3B; CDCl**_{**3**}**) :** δ 6.11 (s, 1H, Hₐ), 5.59 (s, 1H, Hₐ,), 5.19 (q, 1H, Hₑ), 4.50-4.26 (m, 4H, H_{c}, H_{d}), 4.42 (q, J_{gh} = 6.9 Hz, 1H, H_{g}), 2.80 (bs, OHᵢ), 1.94 (s, 3H, H_{b}), 1.55 (d, 3H, H_{f}), 1.45 (d, J_{gh} = 6.9 Hz, 3H, Hₕ).

Mixtures of *N*-isopropylacrylamide (NIPAAm) and HEMA-monolactate were prepared with NIPAAm/HEMA-monolactate ratios of 100/0, 95/5, 90/10, 80/20, 65/35 and 50/50 (mol/mol), the total monomer concentration being 0.1 g/cm³ in 1,4-dioxane. α,α'-azoisobutyronitril (AIBN) was added as initiator in an amount so that monomer/initiator = 250/1. The copolymerization was conducted at 60°C for 20 hours in a nitrogen atmosphere. Subsequently, the solvent was removed under pressure and the copolymers were dissolved in acetone (20 % (w/v)) and precipitated in an excess of diethylether. The precipitated polymers were isolated by filtration and dried in a vacuum oven at 40°C.

### REFERENCE EXAMPLE 1

### Synthesis of poly(N-isopropylacrylamide-co-2-hydroxyethyl methacrylate)

Polymers without the monolactate group on the HEMA monomer, *i.e.* poly(*N*-isopropylacrylamide-co-2-hydroxyethyl methacrylate), were prepared to be used as a reference, starting from NIPAAm and 2-hydroxyethyl methacrylate (HEMA) in ratios NIPAAm/HEMA of 100/0, 95/5, 90/10, 80/20 and 60/40. The synthesis was carried out as in Example 1.

### EXAMPLE 2

### Hydrolysis of poly(N-isopropylacrylamide-co-2-hydroxyethyl methacrylate-monolactate)

The different polymers from Example 1 were dissolved in phosphate buffered saline (PBS, pH = 7.2) in concentrations of 5 mg/cm³ at a temperature below the LCST. The pH of the homogeneous solution was adjusted to 10.5 by addition of 0,1 N NaOH. The samples were incubated at 37°C, which resulted in precipitation of the polymer. After three days, the samples were cooled to room temperature and the pH was adjusted to 7.2 by addition of 0.1 N HCl. Next, the samples were filtrated (FP 030/3, Disposable Filter Holder, 0.2 mm; Schleicher & Schuell GmbH, Dassel, Germany) and then dialyzed against water at 4°C (Dialysis Tubing-Visking, Size 9 Inf Dia 36/32"-28.6 mm: 30 M, MWCO-12-14000 Daltons; MEDICELL International Ltd., London, Great Britain). The hydrolyzed polymers were collected after freeze-drying.

The LCST of the different polymers was determined by static light scattering. The degree of light scattering at 650±5 nm was measured under a 90° angle, using a Luminescence Spectrometer LS50 (Perkin Elmer Limited, United Kingdom). Samples were prepared by dissolving the copolymers in PBS (pH = 7.2) in a concentration of 0.1 mg/cm³. The temperature of the samples was increased from 10 to 40°C at a rate of 1°C/min. The intensity of the scattered light was measured at intervals of 0.2°C. Inflection points of the intensity-temperature curves were taken as the LCST values, a typical example is given in Figure 1.

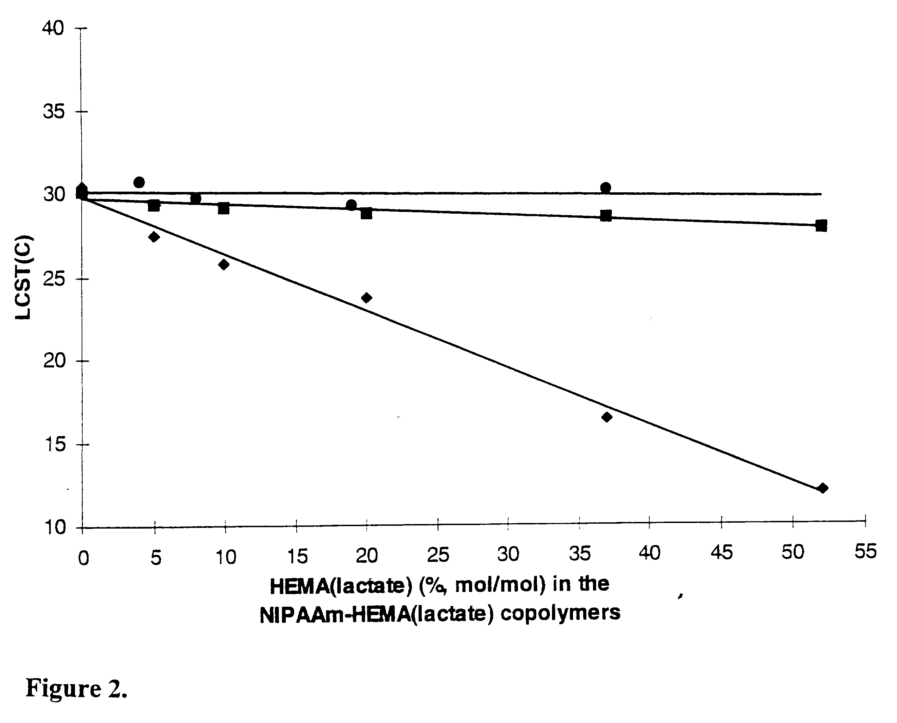

The LCST values for the poly(NIPAAm-co-HEMA-monolactate) before and after incubation are given in Figure 2, together with the LCST values of the reference polymer. From Figure 2 it follows that the LCST of poly(NIPAAm-co-HEMA-monolactate) upon incubation increases due to the hydrolysis of the lactate groups. The LCST values for the different poly(NIPAAm-co-HEMA-monolactate) copolymers after incubation approach that of the poly(NIPAAm-co-HEMA), which lacks the lactate group. This increase of LCST is the result of the hydrolysis of the lactate groups.

### EXAMPLE 3

### Synthesis of terpolymers of NIPAAm/ HEMA monolactate/acrylamide

Mixtures of N-isopropylacrylamide (NIPAAm), HEMA-monolactate and acrylamide (Aam) were prepared with NIPAAm/HEMA-monolactate and Aam ratios of 70/20/10, 60/20/10/ and 50/20/30 (mol/mol/mol), the total monomer concentration being 0.1 g/cm³ in 1,4-dioxane (volume 5 ml). AIBN was used as initiator (250 mol monomers/1 mol initiator). The copolymerization was conducted at 60°C for 20 hours in a nitrogen atmosphere.

The terpolymer prepared with the 70/20/10 comonomer ratio was isolated as described for the NIPAAm/HEMA-monolactate polymers (Example 1). The other terpolymers were isolated as follows. To the polymer solution, 20 ml water was added and the resulting mixture was dialyzed against water at 4°C. The polymers were collected after freeze-drying.

### REFERENCE EXAMPLE 3

### Synthesis of NIPAAm/HEMA/AAm terpolymers

Polymers without the monolactate group on the HEMA monomer, *i.e.* NIPAAm/HEMA/AAm terpolymers, were prepared to be used as a reference, starting from NIPAAm, HEMA and Aam in ratios NIPAAm/HEMA/AAm of 70/20/10, 60/20/20 and 50/20/30 (mol/mol/mol).

The synthesis was carried out as in Example 3 with a total monomer/AIBN ratio of 125/1 mol/mol). The polymers were isolated after dialysis and freeze drying as described for the polymers in Example 3.

### EXAMPLE 4

### Hydrolysis of NIPAAm/HEMA-monolactate/AAm terpolymers.

Hydrolysis of the lactate ester side groups of the different polymers from Example 3 was done using the procedure described in Example 2.

The LCST of the different polymer was determined by static light scattering as described in Example 2. Table 1 summarizes the results.

**Table 1.**

| Terpolymer | feed ratio (mol/mol/mol) | LCST±S.D (°C)⁺ | LCST±S.D. (°C)⁺⁺ |
|---|---|---|---|
| NIPAAm/HEMA/AAm | 70/20/10 | 28.7±0.5 | 31.9±0.5 |
| NIPAAm/HEMA/AAm | 60/20/20 | 36.7±0.3 | 40.6±0.5 |
| NIPAAm/HEMA/AAm | 50/20/30 | 42.3±0.3 | 52.6±0.5 |
| NIPAAm/HEMA-monolactate/AAm | 70/20/10 | 24.0±0.1 | 26.7±0.1 |
| NIPAAm/HEMA-monolactate/AAm | 60/20/20 | 30.7±0.5 | 35.0±0.9 |
| NIPAAm/HEMA-monolactate/AAm | 50/20/30 | 39.2±0.3 | 43.6±0.4 |
| NIPAAm/HEMA/AAm* | 70/20/10 | 33.8±1.8 | 38.3±1.1 |
| NIPAAm/HEMA/AAm* | 60/20/20 | 59.2±0.3 | 64.8±0.8 |
| NIPAAm/HEMA/AAm* | 50/20/30 | | broad temp. range |

| | | | |
|---|---|---|---|
| * after hydrolysis of the lactate ester side groups | | | |
| + determined with static light scattering (n=3-4); onset point (see Figure 1) | | | |
| ++ determined with static light scattering (n=3-4); inflection (see Figure 1); S.D. is the standard deviation | | | |

Table 1 shows that it is possible to synthesize polymers that have an LCST below body temperature, but have an LCST above this temperature after hydrolysis of the side groups. This means that the polymer is initially insoluble in water at 37°C, however, the polymer gradually start to dissolve once (part of) the side groups are hydrolyzed.

### EXAMPLE 5

### Hydrolysis of poly(NIPAAm-co-glycidylmethacrylate)

Poly(NIPAAm-co-glycidylmethacrylate) was synthesized as in the previous Examples using different ratios of the NIPAAm and glycidylmethacrylate monomer. The epoxy group of the glycidylmethacrylate can be hydrolized to the corresponding diol group, yielding a glycerylmethacrylate functional unit. Hydrolysis was performed using an aqueous solution of sulfuric acid. The results are summarized in Table 2.

**Table 2.**

| NIPAAm/glycidylmethacrylate (mol/mol) | LCST ± S.D. (°C)⁺ | LCST ± S.D. (°C)⁺⁺ |
|---|---|---|
| 95/5 | 29.1±0.4 | 30.4±1.5 |
| 90/10 | 27.3±0.2 | 32.6±0.5 |
| 80/20 | 25.1±0.3 | 34.2±1.1 |
| 65/35 | 20.2±0.1 | 35.9±1.4 |
| 50/50 | 18.4±0.4 | 41.9±na* |

| | | |
|---|---|---|
| + before hydrolysis | | |
| ++ after hydrolysis; S.D. is the standard deviation | | |
| * not available | | |

From this Example it follows that the ratio of the monomers at which the resulting polymer has desirable LCST values can be determined experimentally.

## Claims

1. Temperature sensitive polymer having a lower critical solution temperature that changes during incubation in an aqueous solution.

2. Polymer according to claim 1 wherein the hydrophilicity changes by incubation in an aqueous solution.

3. Polymer according to claim 1 or 2 in which the polymer is comprised of at least one monomer selected from the group consisting of acrylamide, methacrylamide, acrylic acid, N-isopropyl acrylamide (NIPAM), 2-hydroxyethyl methacrylate (HEMA), 2-hydroxyethyl acrylate (HEA), acrylamide (AAm), glyceryl methacrylate or glycidyl methacrylate (GMA), glyceryl acrylate or glycidyl acrylate (GA), hydroxypropyl methacrylamide (HPMAM), dimethyl-aminoethyl methacrylate (DMAEMA) and dimethylaminoethyl acrylate (DMAEA), and derivates and substituted species thereof, part of which monomers having an enzymatically or chemically hydrolysable group.

4. Polymer according to any of the previous claims which is a copolymer or a terpolymer of two or more monomers selected from said group.

5. Polymer according to any of the previous claims which is a block copolymer or terpolymer, a random copolymer or terpolymer, or a polymeric network and which polymer is optionally grafted.

6. Polymer according to any of the previous claims which comprises hydrolysable groups, each said hydrolysable group being selected from the group consisting of ester, amide, carbonate, carbamate, and anhydride groups.

7. Polymer according to any of the previous claims which polymer is selected from the group consisting of a copolymer of N-isopropyl acrylamide and 2-hydroxyethyl methacrylate-monolactate; a copolymer of N-isopropyl acrylamide and glyceryl methacrylate; a terpolymer of N-isopropylacrylamide (NIPAAm), 2-hydroxyethyl methacrylate-monolactate and acrylamide; and mixtures thereof.

8. Polymer according to any of the previous claims in which the lower critical solution temperatures before incubation is below mammalian body temperatures and lower critical solution temperature after incubation is above mammalian body temperatures.

9. Controlled release system comprising a temperature sensitive polymer according to any of the previous claims and an active ingredient.

10. Controlled release system according to claim 9 in which the polymer is in the form of a polymeric micelle in which a hydrophilic block is present which preferably comprises poly(ethyleneglycol).

11. Targeting drug comprising a drug and particles of a controlled release system according to claim 9 or 10, which particles have an average diameter of less than 100 nm.

12. Targeting drug according to claim 11 which comprises a homing device.

13. 2-(Methacryloyloxy)ethyl-lactate and oligolactates thereof, preferably 2-(methacryloyloxy)ethyl-dilactate.

14. Process for the preparation of a temperature sensitive polymer comprising synthesizing a water soluble polymer by a) functionalizing a monomer with hydrolysable groups, b) mixing of said monomer with at least one monomer of a different type using a suitable solvent in the presence of an initiator and/or a catalyst to form said polymer c) removing said solvent and dissolving the polymer, and d) precipitating said polymer; in which process the functionalizing of the monomers of step a) is optionally carried out after step b) on the monomer units as incorporated in the polymer chain; and subsequently mixing said water soluble polymer with a releasable compound.

15. Use of hydrolysable chemical groups in a temperature sensitive polymer in a controlled release system comprising a releasable compound in order to change said polymer's solution characteristics.
